# EUROPÄISCHE PATENTSCHRIFT

(11) **EP 0 681 715 B1**
(45) Veröffentlichungstag und Bekanntmachung des Hinweises auf die Patenterteilung: **03.06.1998**
(21) Anmeldenummer: 95900072.0
(22) Anmeldetag: 02.11.1994
(51) Int. Cl.: G05B 19/042, E05F 15/14

(54) **STEUERUNG UND REGELUNG FÜR EINE DURCH EINEN ELEKTROMECHANISCHEN MOTOR ANGETRIEBENE TÜR**
CONTROL AND REGULATION OF DOORS DRIVEN BY AN ELECTROMECHANICAL MOTOR
COMMANDE ET REGULATION D'UNE PORTE ENTRAINEE PAR UN MOTEUR ELECTROMECANIQUE

(30) Priorität: 30.11.1993 DE 4340715
(43) Veröffentlichungstag der Anmeldung: 15.11.1995
(73) Patentinhaber: DORMA GmbH + Co. KG, D-58256 Ennepetal (DE)
(72) Erfinder: STARK, Jürgen, D-45527 Hattingen (DE)
(86) Internationale Anmeldenummer: DE9401316
(87) Internationale Veröffentlichungsnummer: WO9515517

(56) Entgegenhaltungen:
- EP-A- 0 192 157
- EP-A- 0 264 350
- WO-A-93/18444
- DE-A- 4 131 396
- US-A- 5 127 190

## Beschreibung

Die Erfindung betrifft eine Steuerung und Regelung für eine durch einen elektromechanischen Motor angetriebene Tür gemäß dem Oberbegriff des Patentanspruches 1.

Es gibt die verschiedensten Arten von automatischen Türen, wie Karusselldrehtüren, Schiebetüren, Bogenschiebetüren, Falttüren usw., die alle durch einen Elektromotor angetrieben werden. Zur Steuerung und Regelung wird eine Einheit verwendet, die mit einem Mikroprozessor ausgerüstet ist, der aufgrund von Ablaufprogrammen in Verbindung mit extern anzuschließenden Sensoren oder anderen Sicherheitseinrichtungen die Steuerung und Regelung der entsprechend angeschlossenen Tür vornimmt.

Eine Schiebetür der gattungsgemäßen Art ist aus der deutschen Offenlegungsschrift 39 40 762 zu entnehmen. Hier ist ein Türsicherheitsbaustein vorhanden, in dem die für die Tür sicherheitsrelevanten Funktionen zusammengefaßt und verarbeitet werden.

Eine Karusselldrehtür, die mit Hilfe eines Multitaskingsystems gesteuert und geregelt wird, ist aus der DE-PS 42 07 705 bekannt geworden. In einer Datenverarbeitungseinheit werden sämtliche Funktionen der Tür einschließlich der Steuerung und des Mikroprozessors intem selbstüberwacht.

Jedoch ist von allen auf dem Markt befindlichen Steuerungen und Systemen keines in der Lage, über einen separaten, unabhängig von dem verwendeten Mikroprozessor und den verwendeten Steuerungs- bzw. Regelungsschaltungen einen doppelten Sicherheitsbeitrag zu leisten.

Die Aufgabe der Erfindung ist es, ein erhöhtes Sicherheitsniveau für eine automatisch betriebene Tür, welche mittels eines Mikroprozessors gesteuert bzw. geregelt wird, zu schaffen, das es aber auch ermöglicht, manuelle Eingriffe vornehmen bzw. Überprüfungen durchführen zu können.

Die Aufgabe wird erfindungsgemäß durch das Kennzeichen des Patentanspruches 1 gelöst. Neben der normalen Verarbeitung der Eingangssignale durch einen Mikroprozessor, werden die sicherheitsrelevanten Signale, die von Sensoren oder Schaltern kommen können, auch gleichzeitig einer Sicherheitsüberwachung zugeleitet. Innerhalb der Sicherheitsüberwachung wird nach vorgegebenen Kriterien entschieden, ob ein Fehler im System vorliegt, und ob dieser Fehler zum Stillstand der Tür führen muß. Liegt ein sicherheitsrelevanter Fehler vor, so wird er einer Fehlermeldeeinheit mitgeteilt, die ihrerseits dafür Sorge trägt, daß der Motor der angeschlossenen Tür unmittelbar zum Stillstand kommt. Es wird so ein quasi redundantes oder zweikanaliges System geschaffen. bei dem auch innerhalb des Mikroprozessors das gleiche Signal verarbeitet wird. Durch die Zweikanaligkeit ist sichergestellt, daß bei Ausfall eines der Sicherheitspfade, sei es der des Mikroprozessors oder der der Sicherheitsüberwachung, auf jeden Fall die angeschlossene Tür zum Stillstand gebracht werden kann und damit Schaden von den benutzenden Verkehrskreisen ferngehalten.

Gleichzeitig ist ein weiterer Schritt zur erhöhten Sicherheit dadurch begangen worden, daß ein Watch-Dog-Timer, welcher sich nicht innerhalb des Mikroprozessors befindet, sondern außerhalb, angeschlossen wird. Dieser Watch-Dog-Timer wird jedoch vom Mikroprozessor getriggert, so daß bei Ausfall des Mikroprozessors automatisch auch das angeschlossene System zum Stillstand gebracht wird. Eine erneute Inbetriebnahme des Türsystemes ist nur dann möglich, wenn beim Ansprechen durch die Sicherheitsüberwachung ein manueller Reset-Start durchgeführt wird.

Durch eine Serviceeinheit, die an die Mikroprozessorsteuerung angeschlossen wird, ist das Servicepersonal in der Lage, eine Überprüfung des gesamten Systemes mit allen sicherheitsrelevanten Operationen durchzuführen. Dieses kann beispielsweise durch manuelle Schalter erfolgen. Durch die Betätigung eines Schalters kann dadurch ein festes Signal angelegt werden, wodurch über einen Programmablauf z.B. das Bremsen der Tür auf ein mögliches Stoppsignal der Sensorik unterbunden wird, so daß die Sicherheitsüberwachung diese Aufgabe für den Test übernehmen muß.

Alle auftretenden Fehler werden entweder an einer gesonderten Fehleranzeige oder aber auch in einer Fehlermeldung der Sicherheitsüberwachung angezeigt. Dies kann entweder akustisch oder optisch oder gleichzeitig geschehen.

Die Erfindung wird anhand eines möglichen schematisch dargestellten Ausführungsbeispieles näher erläutert. Es zeigt:
- Figur 1:: Schaltungskonzept einer mit doppelter Sicherheit ausgerüsteten Steuerung und Regelung
- Figur 2:: Sicherheitsüberwachung
- Figur 3:: Schaltungsprinzip eines redundant aufgebauten Sicherheitskonzeptes

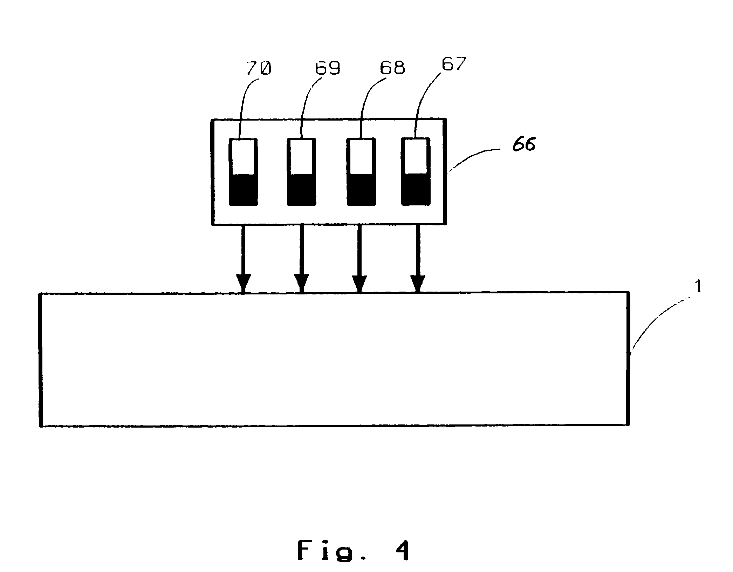

- Figur 4:: Serviceeinheit mit Mikroprozessorsteuerung

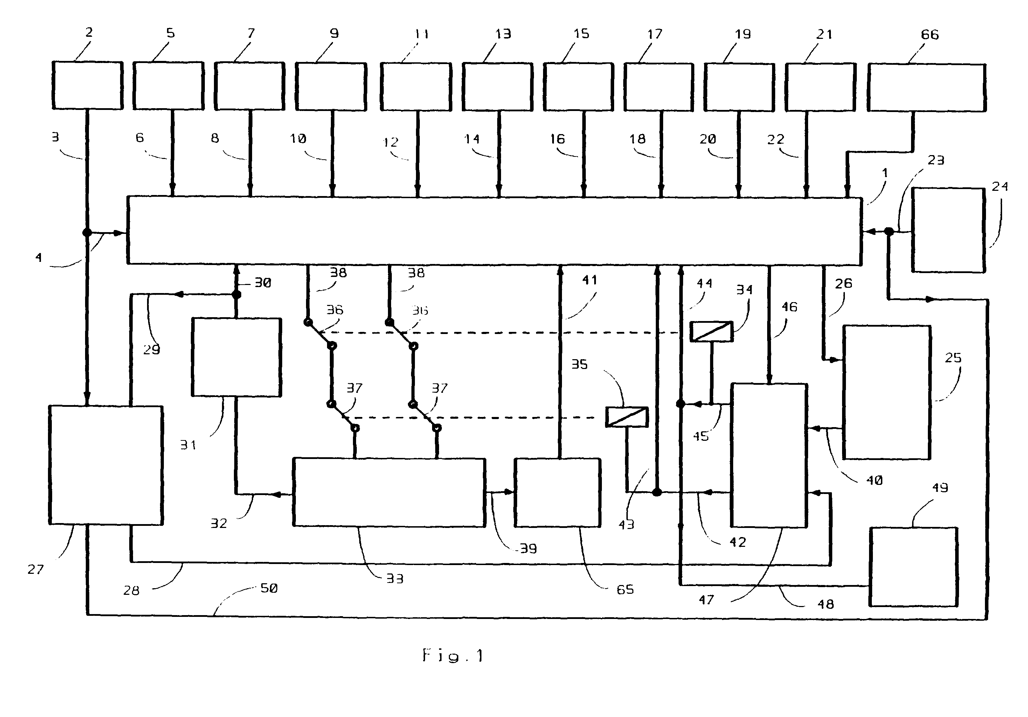

In der Figur 1 wird die grundsätzliche Verknüpfung der Mikroprozessorsteuerung 1 mit den anzuschließenden sicherheitsrelevanten Zweigen sowie der Sicherheitsüberwachung 27 und deren Fehlermeldeeinheit 47 in Verbindung mit dem Watch-Dog-Timer 25 dargestellt. Generell muß noch einmal zum Ausdruck gebracht werden, daß dieses Steuerungs- bzw. Regelungskonzept unabhängig von dem anzuschließenden Türtyp ist, und damit auf alle Steuerungen und/oder Regelungen von automatischen Türen angewendet werden kann. Die Informationen der verschiedenen Programm-Modes 2, 5, 7 werden mittels der Verbindungen 3, 4, 6 und 8 der Mikroprozessorsteuerung 1 zugeleitet. Die darüber hinaus angeschlossenen sicherheitsrelevanten Einrichtungen, wie Sensor 9, Verriegelung 11, ein weiterer Sensor 13, Schalter 15, Sicherheitshalt 17, werden ebenfalls über die Verbindungen 10, 12, 14, 16 und 18 an die Mikroprozessorsteuerung 1 gemeldet. Ein beispielsweise besonders sensibler Bereich des Programm-Modes 2 wird neben der Verarbeitung in der Mikroprozessorsteuerung 1 ebenfalls über die Verbindung 3 an die Sicherheitsüberwachung 27 weitergeleitet. Die Sicherheitsüberwachung 27 stellt hier in diesem Ausführungsbeispiel die Zweikanaligkeit dar, da unabhängig von der Mikroprozessorsteuerung 1 die Sicherheitsüberwachung 27 in Verbindung mit der Fehlermeldeeinheit 47 in der Lage ist, den angeschlossenen Motor zum Stillstand zu bringen.

Da die Sicherheitsüberwachung 27 einen direkten Zugriff auf ein mögliches Blockieren des Motors 33 hat, so ist auch das von dem Motor über die Verbindung 32 gelieferte Signal an den Encoder 31 über die Verbindung 29 an die Sicherheitsüberwachung 27 zu bringen. Gleichzeitig ist der Encoder 31 über die Verbindung 30 auch mit der Mikroprozessorsteuerung 1 verbunden. Es zeigt sich hier, daß sowohl an die Mikroprozessorsteuerung 1 und an die Sicherheitsüberwachung 27 gleichzeitig die Meldung über Drehrichtung und Geschwindigkeit des Motors mitgeteilt wird.

Ist beispielsweise durch einen technischen Defekt die Mikroprozessorsteuerung 1 in ihrem Abschaltzweig nicht funktionsfähig, so wird über die Verbindung 28 von der Sicherheitsüberwachung 27 aus die Fehlermeldeeinheit 47 angesprochen. Diese Fehlermeldeeinheit 47 kann so beispielsweise durch die Ansteuerung 42 des Relais 35, dieses zum Ansprechen bzw. je nach Schaltung auch zum Abfall bringen, so daß die Kontakte 37 die Ansteuerung 38 des Motors 33 unterbrechen. Je nach verwendetem Gleichstrommotor 33 kann dieser beispielsweise auf einem Bremswiderstand arbeiten oder aber direkt kurzgeschlossen werden. Dies hat zur Folge, daß die angeschlossene Tür unmittelbar zum Stillstand kommt. Neben der Ansteuerung des Relais 35 wird auch gleichzeitig von der Ansteuerung 42 über die Verbindung 43 dieses Signal an die Mikroprozessorsteuerung 1 weitergeleitet.

Um mit Sicherheit das ordnungsgemäße Arbeiten der Mikroprozessorsteuerung 1 zu gewährleisten, wird von dieser ein Triggersignal 26 an einen Watch-Dog-Timer 25 geliefert. Dieser Watch-Dog-Timer gibt seinerseits ein Reset-Signal 40 an die Fehlermeldeeinheit 47. Auch dieses zeigt, daß an ein erhöhtes Sicherheitsrisiko der Mikroprozessorsteuerung 1 gedacht ist, denn sollte die Mikroprozessorsteuerung 1 nicht in der Lage sein, den Motor 33 zum Stillstand zu bringen, weil sie möglicherweise ausgefallen ist, so würde in diesem Fall der Watch-Dog-Timer 25 an die Fehlermeldeeinheit 47 eine entsprechende Meldung abgeben, und die Fehlermeldeeinheit 47 würde den Motor 33 zum Stillstand bringen. Wird durch Abschaltung des Nebenweges, d.h. über die Sicherheitsüberwachung 27 der Motor 33 zum Stillstand gebracht, so hat grundsätzlich in der Steuerung ein Fehler vorgelegen. Dieses rechtfertigt, daß die Tür nicht unmittelbar durch Eigenanstoß wieder zum Laufen kommt, sondern es muß durch einen manuellen Reset-Start 24 die Gesamtanlage bewußt wieder in Betrieb gesetzt werden. Dieser Reset-Start 24 geht zum einen über die Verbindung 23 zur Mikroprozessorsteuerung 1 und außerdem über die Verbindung 50 unmittelbar zur Sicherheitsüberwachung 27, so ist auch hier die Zweikanaligkeit unabhängig von der Mikroprozessorsteuerung 1 zu erreichen.

Die Fehlermeldeeinheit 47 ist jedoch auch durch die Mikroprozessorsteuerung 1 über die Verbindung 46 zu testen. Hier wird über die Ansteuerung 45 das Relais 34 aktiviert. Die Rückmeldung, daß das Relais 34 angesteuert worden ist, erfolgt über die Verbindung 44, an die Mikroprozessorsteuerung 1. Das Relais 34 unterbricht mit seinen Kontakten 36 die Ansteuerung 38 des Motors 33. Gleichzeitig mit der Ansteuerung des Relais 34 wird auch die Verbindung 48, die Fehleranzeige 49 aktiviert. In der Fehleranzeige kann entweder ein akustisches Signal oder aber eine optische Anzeige gesetzt werden, damit das Bedienpersonal bzw. der Servicemann direkt weiß, welcher Fehler im System aufgetreten ist.

Eine weitere Sicherheitseinrichtung liegt darin, daß über die Verbindung 39 vom Motor 33 eine Motorstromüberwachung 65 vorhanden ist. Auch die Motorstromüberwachung 65 liefert über die Verbindung 41 ständig ihre Signale an die Mikroprozessorsteuerung 1.

Neben den bereits vorerwähnten verschiedenen Anschlußmöglichkeiten ist auch noch die Art der gewählten Geschwindigkeit über die Geschwindigkeitsmeldung 19 in Verbindung mit der Verbindung 20 zur Mikroprozessorsteuerung 1 vorhanden, ebenso, wenn es sich um eine Karusselldrehtür handelt, wird die Ruhestellung (X-Position) 21 über die Verbindung 22 an die Mikroprozessorsteuerung 1 mitgeteilt.

Neben dem automatischen Betrieb wie vorbeschrieben, ist es auch möglich, an die Mikroprozessorsteuerung 1 eine Serviceeinheit 66 anzuschließen, die es erlaubt, über zusätzliche manuelle Schalter die zweikanalige Sicherheitsüberwachung des Gesamtsystemes zu testen. Hierzu ist es allerdings notwendig, daß ein Ablaufprogramm innerhalb der Mikroprozessorsteuerung 1 das Bremsen der Tür auf ein Stoppsignal der Sensorik unterbindet. So ist es möglich, daß über die verschiedensten Schalter, wie beispielsweise Teststopp 67, Automatik 68, Servo 69 und Position 70, verschiedene Modalitäten und damit auch gleichzeitig Sicherheitsfunktionen getestet werden können, um festzustellen, ob sie noch in der vom Hersteller vorgegebenen Toleranz liegen oder nicht. Durch diese Maßnahme ist es möglich, auch frühzeitig ein Abdriften unterschiedlichster Werte festzustellen, und das Servicepersonal ist in der Lage, in diesem Falle aufgrund der vorbeugenden Wartung hier in der Steuerung entsprechende Maßnahmen zu treffen, damit im Anschluß an den Testbetrieb die Tür im Normalbetrieb nicht ausfällt.

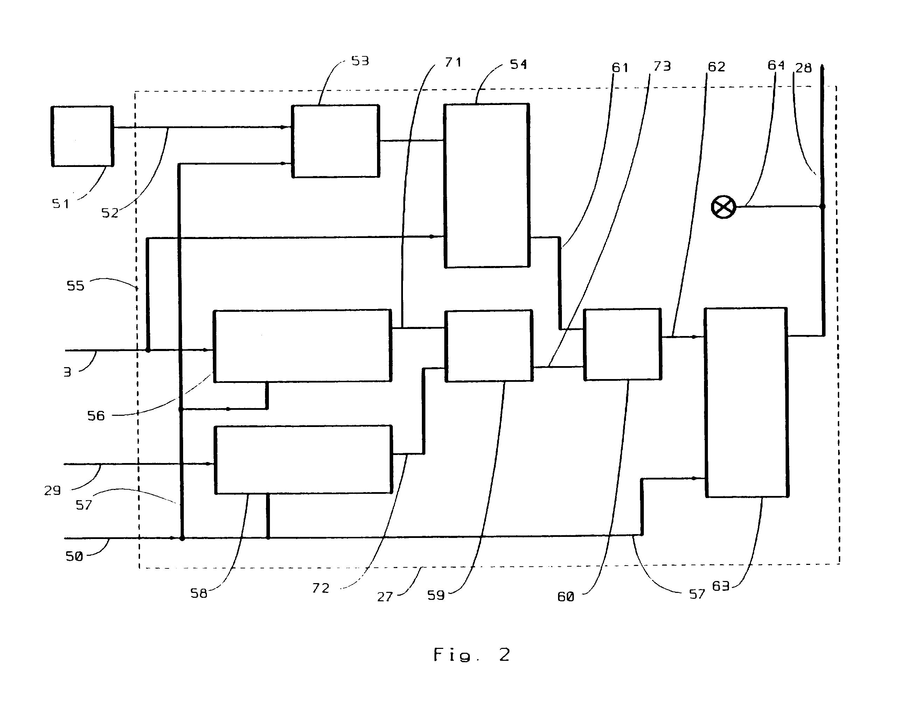

Wie die Sicherheitsüberwachung 27 arbeitet, zeigt die Figur 2. Ausgehend von der Mikroprozessorsteuerung 1 wird, nachdem die Tür abgebremst worden ist, auf normalem Wege hier ein normales Reset-Signal Bremse 51 über die Verbindung 52 an den Vergleicher 53 geliefert. Dieser Vergleicher 53 setzt bei einem Signal > oder = 1 das RS-Flip-Flop 54 über den Reset-Eingang. Somit ist das Flip-Flop 54 aktiviert und kann beim Anliegen eines Stoppsignals über die Leitung 3 in Verbindung mit der Verbindung 55 über seinen S-Eingang gesetzt werden. Das RS-Flip-Flop 54 gibt ein vorbereitendes Signal über die Verbindung 61 an das UND-Gatter 60. So wird beispielsweise ein Not-Stopp abgespeichert. Jedoch wird auch dieses Stoppsignal über die Verbindung 3 gleichzeitig an ein Mono-Flop 56 gegeben. Das Mono-Flop wird dadurch getriggert und erzeugt für einen bestimmten Zeitraum, abhängig vom Bremsweg der Tür, ein Low-Signal. Diese Zeit ist die Wartezeit, in der normalerweise die Mikroprozessorsteuerung 1 die Tür gestoppt haben muß. Nach der eingestellten Zeit fällt das Mono-Flop 56 wieder auf 1 zurück und gibt diese Information über die Verbindung 71 an das UND-Gatter 59. Wird innerhalb der vorgegebenen Zeit , die abhängig ist vom angeschlossenen Türtyp, der Motor 33 nicht zum Stillstand gebracht, so liefert der Encoder 31 über die Verbindung 29 weiterhin seine Impulse an das Mono-Flop 58. Der Ausgang des Mono-Flops 58 geht über die Verbindung 72 ebenfalls zu dem UND-Gatter 59. Liegen an beiden Eingängen des UND-Gatters 59 High-Signale an, so wird der Ausgang des UND-Gatters 59 ebenfalls auf high geschaltet und gibt diese Information über die Verbindung 73 an das danach folgende UND-Gatter 60 weiter. Da in diesem Falle die Tür ja noch nicht steht, liegt auch über die Verbindung 61 von dem Flip-Flop 54 ein High-Signal auf dem zweiten Eingang des UND-Gatters 60 an. Demzufolge ist der Ausgang des UND-Gatters 60 ebenfalls mit einem High-Signal behaftet, das über die Verbindung 62 das RS-Flip-Flop 63 setzt. Dadurch kippt das RS-Flip-Flop 63 um und meldet über die Verbindung 28 einen Fehler im System an die Fehlermeldeeinheit 47, die dann ihrerseits, wie bereits vorbeschrieben, den Motor 33 zum Stillstand bringt. Gleichzeitig wird auch eine Fehleranzeige 64 durchgeführt, die signalisiert, daß über die Sicherheitsüberwachung 27 die Tür zum Stillstand gebracht worden ist. Erst durch einen Reset-Start 24 kann die Tür wieder in Betrieb genommen werden. Dieser Reset-Start 24 wird über die Verbindung 50 an die Sicherheitsüberwachung 27 geleitet, wo sie ihrerseits über die Verbindungen 57 die Mono-Flops 56 und 58 sowie das RS-Flip-Flop 63 wieder zurücksetzt.

Ist in einem solchen Fall dann die Mikroprozessorsteuerung 1 in der Lage, die normale Bremsung der Tür durchzuführen, so wird über das Reset-signal 51 auch der Vergleicher 53 zurückgesetzt, und damit ist es möglich, auch das Flip-Flop 54, in welchem der gespeicherte Not-Stopp noch gesetzt ist, wieder für eine Überwachung zu aktivieren. Die vorbeschriebene Schaltungsart des Systemes arbeitet, wie sich zeigt, unabhängig von der Mikroprozessorsteuerung 1, als zweikanalige Sicherheitsüberwachung.

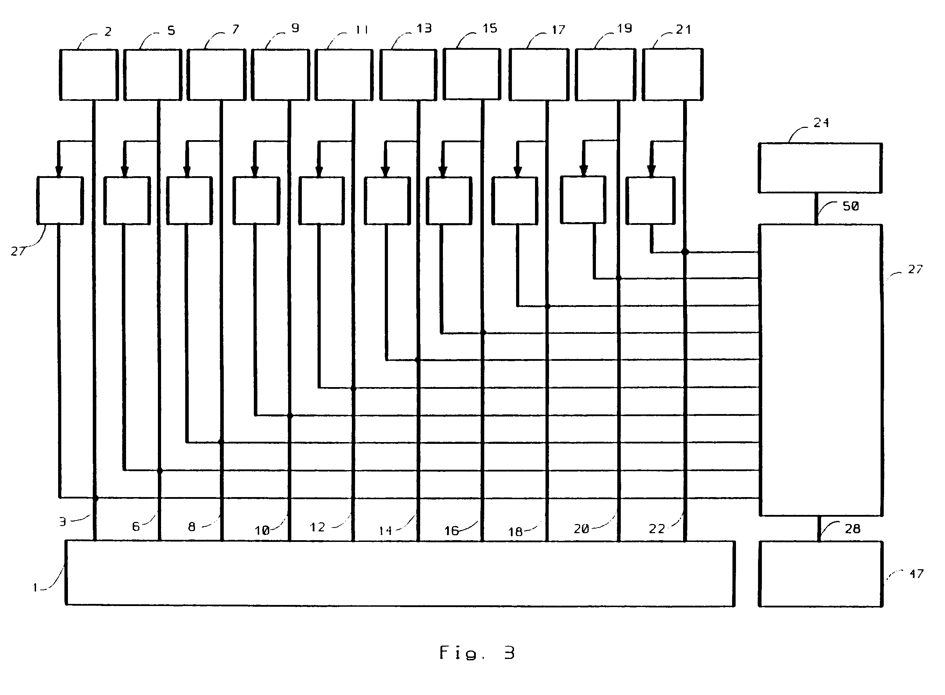

Die vorbeschriebene Schaltungsart und damit redundante Ausführungsform läßt sich natürlich auch, wie in Figur 3 dargestellt ist, für alle Eingangssignale 2, 5, 7, 9, 11, 13, 15, 17, 19 und 21 realisieren, wo einerseits die Informationen direkt an die Mikroprozessorsteuerung 1 geleitet werden, und andererseits sie aber auch direkt an die Sicherheitsüberwachung 27 gebracht werden. Die Sicherheitsüberwachung 27 arbeitet in diesem Fall genauso wie vorbeschrieben, nur die Schaltung ist entsprechend erweitert worden.

Es kann somit durch die nicht abschließend aufgeführten Schalter der Informationsfluß unterbunden werden, was zwangsläufig zur Benutzung des zweiten Kanales und damit zur Überprüfung gleichzeitig der Hard- und Software führt. Dieser Sicherheitscheck über die manuellen Schalter wird vorzugsweise nacheinander geschehen.

### Bezugszeichen

- 1: Mikroprozessorsteuerung
- 2: Programm-Mode
- 3: Verbindung
- 4: Verbindung
- 5: Programm-Mode
- 6: Verbindung
- 7: Programm-Mode
- 8: Verbindung
- 9: Sensor
- 10: Verbindung
- 11: Verriegelung
- 12: Verbindung
- 13: Sensor
- 14: Verbindung
- 15: Schalter
- 16: Verbindung
- 17: Sicherheitshalt
- 18: Verbindung
- 19: Geschwindigkeitsmeldung
- 20: Verbindung
- 21: Ruhestellung der Tür
- 22: Verbindung
- 23: Verbindung
- 24: Reset-Start
- 25: Watch-Dog-Timer
- 26: Triggersignal
- 27: Sicherheitsüberwachung
- 28: Verbindung Fehlermeldung
- 29: Verbindung
- 30: Verbindung
- 31: Encoder
- 32: Verbindung
- 33: Motor
- 34: Relais
- 35: Relais
- 36: Kontakte
- 37: Kontakte
- 38: Ansteuerung Motor
- 39: Verbindung
- 40: Resetsignal
- 41: Verbindung
- 42: Verbindung
- 43: Verbindung
- 44: Verbindung
- 45: Ansteuerung
- 46: Verbindung
- 47: Fehlermeldeeinheit
- 48: Verbindung
- 49: Fehleranzeige
- 50: Verbindung
- 51: Resetsignal Bremse
- 52: Verbindung
- 53: Vergleicher
- 54: RS-Flip-Flop
- 55: Verbindung
- 56: Mono-Flop
- 57: Verbindung
- 58: Mono-Flop
- 59: UND-Gatter
- 60: UND-Gatter
- 61: Verbindung
- 62: Verbindung
- 63: RS-Flip-Flop
- 64: Fehleranzeige
- 65: Motorstromüberwachung
- 66: Serviceeinheit
- 67: Test-Stopp
- 68: Automatik
- 69: Servo
- 70: Position
- 71: Verbindung
- 72: Verbindung
- 73: Verbindung

## Patentansprüche

1. Steuerung und Regelung für eine durch einen elektromechanischen Motor angetriebene Tür, deren Bewegungsablauf durch Sensoren gesteuert wird, wobei die Steuerungs- und Regeleinheit einen zur Signal- und Befehlsverarbeitung vorgesehenen Mikroprozessor beinhaltet, dadurch gekennzeichnet, daß die sicherheitsrelevanten Informationen und Daten neben der Verarbeitung in der Mikroprozessorsteuerung (1) auch einer zusätzlichen Sicherheitsüberwachung (27) zugeführt und verarbeitet werden, und das Ausgangssignal (28) der Sicherheitsüberwachung (27) einer Fehlermeldeeinheit (47) zugeführt wird, die über einen direkten Zugriff auf den Motor (33) diesen neben der direkten Ansteuerung durch die Mikroprozessorsteuerung (1) zum Stillstand bringt, und daß an die Mikroprozessorsteuerung (1) eine Serviceeinheit (66) angeschlossen ist.

2. Steuerung und Regelung nach Anspruch 1, dadurch gekennzeichnet, daß der Fehlermeldeeinheit (47) ein von der Mikroprozessorsteuerung (1) getriggerter Watch-Dog-Timer (25) zugeordnet ist.

3. Steuerung und Regelung nach den Ansprüchen 1 und 2, dadurch gekennzeichnet, daß bei einer fehlerhaften Triggerung des Watch-Dog-Timers (25) die Fehlermeldeeinheit (47) den Motor (33) zum Stillstand bringt.

4. Steuerung und Regelung nach Anspruch 1, dadurch gekennzeichnet, daß der Sicherheitsüberwachung (27) und der Mikroprozessorsteuerung (1) die Signale eines Encoders (31) des Motors (33) zugeführt werden.

5. Steuerung und Regelung nach Anspruch 1, dadurch gekennzeichnet, daß der Motorstrom des Motors (33) von einer Motorstromüberwachung (65) überwacht und das Signal (41) der Mikroprozessorsteuerung (1) zugeführt wird.

6. Steuerung und Regelung nach den Ansprüchen 1 bis 3, dadurch gekennzeichnet, daß bei einem Abschalten des Motors (33) über die Sicherheitsüberwachung (27) ein weiterer Betrieb der Tür nur dann möglich ist, wenn über den Reset-Start (24) ein manueller Startbefehl gegeben wird.

7. Steuerung und Regelung nach den vorhergehenden Ansprüchen, dadurch gekennzeichnet, daß beim Auftreten und Erkennen eines Fehlers durch die Mikroprozessorsteuerung (1) dieser Fehler über die Fehleranzeige (49) angezeigt wird und zur Abschaltung des Motors (33) führt.

8. Steuerung und Regelung nach den Ansprüchen 1 bis 6, dadurch gekennzeichnet, daß beim Auftreten und Erkennen eines Fehlers durch die Sicherheitseinrichtung (27) dieser Fehler über die Fehleranzeige (64) angezeigt wird und zur Abschaltung des Motors (33) führt.

9. Steuerung und Regelung nach Anspruch 1, dadurch gekennzeichnet, daß durch die Serviceeinheit (66) die Sicherheitsüberwachung (27) getestet wird.

## Claims

1. A closed-loop and open-loop control system for a door driven by an electromechanical motor, the sequence of motion of which is controlled by Sensors, the open-loop and closed-loop control unit containing a microprocessor which processes signals and commands, characterised in that information and data relevant to security, in addition to being processed in the microprocessor control (1), is also fed to and processed in an additional security monitoring means (27), and the output signal (28) from the security monitoring means (27) is fed to a fault-reporting unit (47) which has direct access to the motor (33) and stops it in addition to direct actuation by the microprocessor control (1), and in that a service unit (66) is connected to the microprocessor (1).

2. A control system according to claim 1, characterised in that the fault-reporting unit (47) is associated with a watchdog timer (25) triggered by the microprocessor control (1).

3. A control system according to claims 1 and 2, characterised in that if triggering of the watchdog timer (25) is faulty, the fault-reporting unit (47) stops the motor (33).

4. A control system according to claim 1, characterised in that the signals from an encoder (31) of the motor (33) are fed to the security monitoring means (27) and the microprocessor control (1)

5. A control system according to claim 1, characterised in that the current of the motor (33) is monitored by a motor-current monitoring means (65) and the signal (41) is fed to the microprocessor control (1).

6. A control system according to claim 1 to 3, characterised in that if the motor (33) is switched off via the security monitoring means (27), further operation of the door is possible only if a manual starting command is given via the reset start (24).

7. A control system according to the preceding claims, characterised in that if a fault occurs and is recognised by the microprocessor control (1), the fault is indicated by a fault display (49) and results in switching off the motor (33).

8. A control system according to claims 1 to 6, characterised in that if a fault occurs and is recognised by the security monitoring means (27), the fault is indicated by the fault display (64)and results in switching off the motor (33).

9. A control system according to claim 1, characterised in that the security monitoring means (27) is tested by the service unit (66).

## Revendications

1. Commande et régulation d'une porte entraînée par un moteur électromécanique, dont le mouvement est commandé par des capteurs, l'unité de commande et de régulation comportant un microprocesseur pour le traitement des signaux et des commandes, caractérisées en ce que les informations et les données relatives à la sécurité sont appliquées non seulement au traitement de la commande à microprocesseur (1) mais également à une surveillance de sécurité (27) supplémentaire qui les traite, et le signal de sortie (28) de la surveillance de sécurité (27) est appliqué à une unité de signalisation de défaut (47) qui, par accès direct au moteur (33), arrête celui-ci en parallèle à la commande directe effectuée par la commande à microprocesseur (1), et une unité de service (66) est reliée à la commande à microprocesseur (1).

2. Commande et régulation selon la revendication 1, caractérisées en ce que l'unité de signalisation de défauts (47) comporte une horloge chien des garde" (25) déclenchée par la commande à microprocesseur (1).

3. Commande et régulation selon les revendications 1 et 2, caractérisées en ce qu'en cas de déclenchement défectueux de l'horloge ,,chien de garde" (25), l'unité de signalisation de défauts (47) arrête le moteur (33).

4. Commande et régulation selon la revendication 1, caractérisées en ce que la surveillance de sécurité (27) et la commande à microprocesseur (1) reçoivent les signaux d'un codeur (31) du moteur (33).

5. Commande et régulation selon la revendication 1, caractérisées en ce que le courant alimentant le moteur (33) est surveillé par une surveillance de courant de moteur (65), et le signal (41) est appliqué à la commande à microprocesseur (1).

6. Commande et régulation selon l'une des revendications 1 à 3, caractérisées en ce qu'à la coupure du moteur (33) par la surveillance de sécurité (27), la suite du fonctionnement de la porte n'est possible que si un ordre de démarrage manuel est fourni par l'intermédiaire d'un démarrage-remise à l'état initial (24).

7. Commande et régulation selon l'une des revendications précédentes, caractérisées en ce qu'à l'arrivée et à la détection d'un défaut par la commande à microprocesseur (1), ce défaut est affiché par l'affichage de défaut (49) et conduit à la coupure du moteur (33).

8. Commande et régulation selon les revendications 1 à 6, caractérisées en ce qu'à l'arrivée et à la reconnaissance d'un défaut par l'installation de sécurité (27), ce défaut est affiché par l'affichage de défaut (64) et conduit à la coupure du moteur (33).

9. Commande et régulation selon la revendication 1, caractérisées en ce que l'unité de service (66) contrôle la surveillance de sécurité (27).
